# EUROPEAN PATENT APPLICATION

(11) **EP 4 510 213 A2**
(43) Date of publication of application: **19.02.2025**
(21) Application number: 24185729.1
(22) Date of filing: 01.07.2024
(51) Int. Cl.: H01M 4/13, H01M 4/70, H01M 10/0587

(54) **BATTERY ELECTRODE SHEET, CYLINDRICAL BATTERY AND METHOD FOR MANUFACTURING SAME**

(30) Priority: 24.07.2023 CN 202310917267
(71) Applicant: Techtronic Cordless GP, Anderson, SC 29621 (US)
(72) Inventor: GENG, Dan, Dongguan City (CN); WU, Kun, Dongguan City (CN); LI, Jin Wei, Dongguan City (CN)
(74) Representative: Novagraaf Group

(57) **Abstract**

The present invention provides a battery electrode sheet, a cylindrical battery, and a method for manufacturing same. The battery electrode sheet comprises a coated zone coated with an electrode material in a longitudinal direction of the electrode sheet, and a bare foil zone not coated with electrode material, the bare foil zone being provided with multiple oblique slots and multiple oblique protrusions in an alternating manner. The cylindrical battery comprises a positive electrode sheet, a negative electrode sheet and a separator, the positive electrode sheet and/or the negative electrode sheet being the battery electrode sheet according to the present invention. The method for manufacturing a cylindrical battery comprises flattening positive/negative electrode end faces of a cell, wherein the direction of flattening is the same as the direction of inclination of oblique protrusions. The present invention mitigates the problems of oblique protrusions breaking and shedding small particles, helping to increase the injection speed of electrolyte liquid and improve the injection effect thereof. In addition, a tab end face of the present invention has more sheet-like structures, and can have surface contact with a collector plate; this can effectively increase the weld residue and weld strength and improve the weld foolproof effect, and thus reduce the battery internal resistance.

## Description

### Technical Field

The present invention relates to the field of batteries, in particular to battery electrode sheet. The present invention further relates to a cylindrical battery and a method for manufacturing same.

### Background Art

Atypical battery comprises a positive electrode sheet, a negative electrode sheet and a separator, the separator being inserted between the positive electrode sheet and negative electrode sheet as an insulator. When coating the positive electrode sheet (usually aluminium foil) with a positive electrode slurry, a partial region not coated with slurry, called a positive electrode bare foil zone, is reserved at a side edge; and when coating the negative electrode sheet (usually copper foil) with a negative electrode slurry, a partial region not coated with slurry, called a negative electrode bare foil zone, is reserved at a side edge. Once the positive electrode sheet, negative electrode sheet and separator have been assembled and rolled up to form a core rolled body (cell), the positive electrode bare foil zone is flattened to form a tab end face of the positive electrode, and the negative electrode bare foil zone is flattened to form a tab end face of the negative electrode. The tab end faces need to be welded to collector plates, in order to output battery current from the collector plates.

To enable bending of the bare foil zone to better suit a flattening process, the flattening process is generally performed on the bare foil zone in the prior art. The tab end faces obtained by flattening still have problems, such as low weld strength and sparse weld residue caused by a small contact area when the tab end faces are welded to the collector plates, resulting in increased battery internal resistance. Furthermore, in the prior art, the tab end faces obtained by flattening are usually relatively close together, and this affects the electrolyte liquid injection speed and injection effect to a certain extent. Another prior art technique is to cut the bare foil zone perpendicular to the longitudinal direction of the electrode sheet to obtain a slit or notch, and then bend towards the centre and press to achieve compaction. With such a solution, a level flat surface is difficult to achieve.

Therefore, there is a need to provide a battery electrode sheet, a cylindrical battery and a method for manufacturing same, to at least partially solve the abovementioned problems.

### Summary of the Invention

An objective of the present invention is to provide a battery electrode sheet, a cylindrical battery, and a method for manufacturing same. The battery electrode sheet according to the present invention comprises a coated zone coated with an electrode material in a longitudinal direction of the electrode sheet, and a bare foil zone not coated with electrode material, the bare foil zone being provided with multiple oblique slots and multiple oblique protrusions in an alternating manner. The cylindrical battery according to the present invention comprises a positive electrode sheet, a negative electrode sheet and a separator, the positive electrode sheet and/or the negative electrode sheet being the battery electrode sheet according to the present invention. The method for manufacturing a cylindrical battery according to the present invention comprises flattening positive/negative electrode end faces of a cell, wherein the direction of flattening is the same as the direction of inclination of the oblique protrusion. Such a design can reduce the resistance encountered by a flattening wheel; the flattening wheel presses the oblique protrusions down onto a tab end face with less hindrance, thus mitigating the problems of breaking and shedding small particles. Moreover, once pressed down, the oblique protrusions are stacked on top of one another like "fish scales", so are more layered, helping to increase the injection speed of electrolyte liquid and improve the injection effect thereof. In addition, in comparison with the problem of weak welds at point contact between a collector plate and a tab end face obtained in the prior art, the tab end face of the present invention has more sheet-like structures, and can have surface contact with a collector plate; this can effectively increase the weld residue and weld strength and improve the weld foolproof effect, and thus reduce the battery internal resistance. The battery may be, but is not limited to being, a lithium-ion battery, a nickel-cadmium battery, a nickel-metal hydride battery, a polymer battery, etc.

According to one aspect of the present invention, a battery electrode sheet is provided, comprising a coated zone coated with an electrode material in a longitudinal direction of the electrode sheet, and a bare foil zone not coated with electrode material, the bare foil zone being provided with multiple oblique slots and multiple oblique protrusions in an alternating manner.

In an embodiment, the oblique slot and the oblique protrusion have the same angle of inclination, which is 35 - 85 degrees, preferably 40 - 80 degrees, and further preferably 50 - 70 degrees.

In an embodiment, the ratio of the depth of the oblique slot to the width of the bare foil zone is 0.2 - 1, preferably 0.3 - 0.8, and further preferably 0.4 - 0.6.

In an embodiment, the widths of the oblique slots gradually increase from one end to the other end of the electrode sheet.

In an embodiment, the ratio of the maximum width to the minimum width of the oblique slots is 5 : 1 - 9 : 1, preferably 6 : 1 - 8 : 1, and more preferably 7 : 1.

In an embodiment, the ratio of the width of the oblique protrusion to the width of an adjacent oblique slot is 1 : 1 - 5 : 1, preferably 1 : 1 - 3 : 1, and more preferably 2 : 1.

In an embodiment, the widths Dₙ of the oblique slots increase as the number of winding turns n of the electrode sheet increases, wherein Dₙ = D₁ + n × Dₐ, where D₁ is the width of an oblique slot in the innermost turn of a core, Dₙ is the width of an oblique slot 21 in the nth turn of the core, and Dₐ is a predetermined value.

In an embodiment, D₁ is 0.2 - 2 mm, preferably 0.5 - 1.5 mm, and further preferably 1 mm.

In an embodiment, the width W of the oblique protrusion is 1 - 5 mm, preferably 1.5 - 3.5 mm, and further preferably 2 mm.

In an embodiment, the oblique slot comprises an oblique slot bottom, the oblique slot bottom comprising a rounded corner structure or a circular arc structure.

In an embodiment, the oblique protrusion comprises an oblique protrusion top, the oblique protrusion top comprising a rounded corner structure or a circular arc structure.

According to another aspect of the present invention, a cylindrical battery is provided, comprising a positive electrode sheet, a negative electrode sheet and a separator, the positive electrode sheet and/or the negative electrode sheet being the battery electrode sheet as described above, an electrode material of the positive electrode sheet being a positive electrode material, and an electrode material of the negative electrode sheet being a negative electrode material.

In an embodiment, the positive electrode sheet, the negative electrode sheet and the separator are rolled up to form a cell, which is flattened such that ends substantially form a flat surface.

In an embodiment, the flat surface comprises multiple sheet-like small pieces formed by the oblique protrusions.

In an embodiment, the sheet-like small pieces have an area of 1 - 10 mm², preferably 2-5 mm².

In an embodiment, the area of a single one of the sheet-like small pieces accounts for 2 - 8% of the area of the flat surface.

In an embodiment, the total area of the multiple sheet-like small pieces accounts for 40 - 90% of the area of the flat surface.

In an embodiment, the cylindrical battery further comprises a collector plate at least partially welded to the sheet-like small piece.

According to another aspect of the present invention, a method for manufacturing a cylindrical battery is provided, comprising the following steps:
step 1: rolling up a positive electrode sheet, a negative electrode sheet and a separator to form a cell, wherein the positive electrode sheet and negative electrode sheet are both battery electrode sheets as described above, an electrode material of the positive electrode sheet being a positive electrode material, and an electrode material of the negative electrode sheet being a negative electrode material;
step 2: flattening positive/negative electrode end faces of the cell;
step 3: welding collector plates to the flattened positive/negative electrode end faces; and
step 4: assembling the welded cell and other battery elements, then performing liquid injection and initial charging.

In an embodiment, in step 2, the direction of flattening is the same as the direction of inclination of an oblique protrusion.

### Brief Description of the Figures

To better understand the above and other objectives, features, advantages and functions of the present invention, reference may be made to the preferred embodiments shown in the drawings. In the drawings, identical reference signs denote identical components. It should be understood by a person skilled in the art that the drawings are intended to schematically illustrate preferred embodiments of the present invention, without imposing any limitations on the scope of the present invention, and that the various components in the drawings are not drawn to scale.
Fig. 1 is a structural schematic drawing of an electrode sheet according to a preferred embodiment of the present invention.
Fig. 2 is a structural schematic drawing of an electrode sheet according to another preferred embodiment of the present invention.
Fig. 3 is a picture of a tab end face obtained in the prior art.
Fig. 4 is a picture of a tab end face obtained in the present invention.

### Key to the drawings:

- 1: coated zone
- 2: bare foil zone
- 21: oblique slot
- 211: oblique slot bottom
- 22: oblique protrusion
- 221: oblique protrusion top

- D: oblique slot width
- W: oblique protrusion width
- h: oblique slot depth
- α: angle of inclination

### Detailed Description of Embodiments

Specific embodiments of the present invention are now described in detail with reference to the drawings. The embodiments described here are merely preferred embodiments according to the present invention. A person skilled in the art could conceive of other ways of implementing the present invention on the basis of the preferred embodiments, and such other ways shall likewise fall within the scope of the present invention. In some embodiments, in order to avoid confusion with the present invention, some technical features that are well known in the art are not described.

### Definitions

Unless otherwise defined, all technical and scientific terms used in the present invention have the same meanings as commonly understood by a person of ordinary skill in the art. In case of conflict, the present invention (including definitions) shall prevail. Only exemplary methods and materials will be described below. Structures, methods and materials similar or equivalent to those described in the present invention can all be used in the experiments or tests of the present invention. The structures, materials, methods, and examples disclosed in the present invention are illustrative only and not intended to be limiting.

Regarding the description of numerical ranges in the present invention, it is expressly anticipated that these ranges include every intermediate number with the same degree of precision. For example, for the range of 6 to 9, the numbers 7 and 8 are considered in addition to 6 and 9, and for the range of 6.0 to 7.0, the numbers 6.0, 6.1, 6.2, 6.3, 6.4, 6.5, 6.6, 6.7, 6.8, 6.9 and 7.0 are expressly anticipated.

### Battery electrode sheet

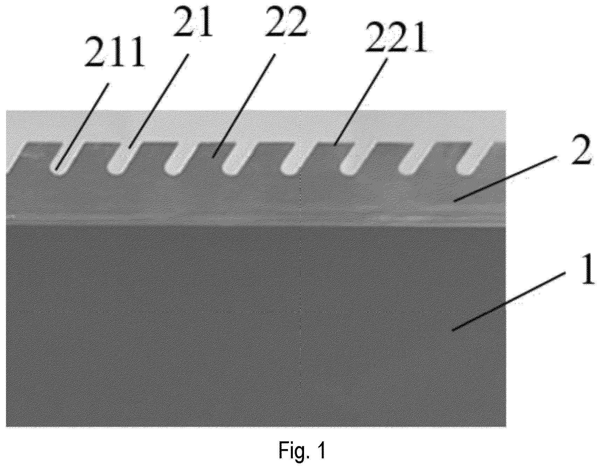

Figs. 1-2 show a battery electrode sheet according to the present invention. First of all, it must be explained that directional and positional terms in the present invention should be understood to mean relative directions and positions, not absolute directions and positions. The directional and positional terms in the present invention may be interpreted with reference to the exemplary structures shown in Figs. 1 - 2.

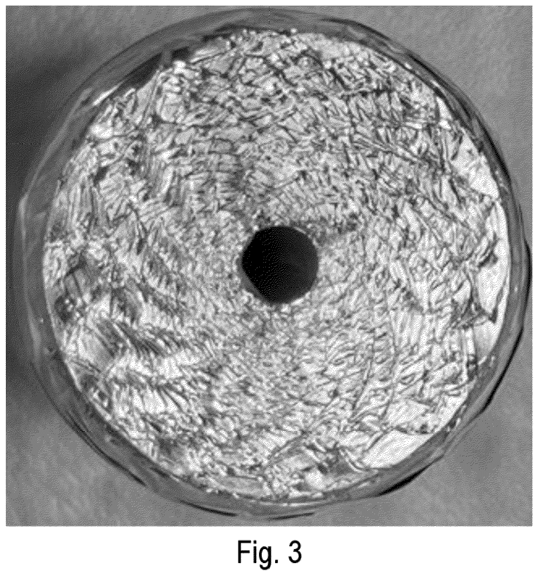

In the prior art, a flattening process is generally performed on a bare foil zone. The tab end faces obtained by flattening still have problems, such as low weld strength and sparse weld residue caused by a small contact area when the tab end faces are welded to the collector plates, resulting in increased battery internal resistance. Furthermore, in the prior art, the tab end faces obtained by flattening are usually relatively close together (as shown in Fig. 3), and this affects the electrolyte liquid injection speed and injection effect to a certain extent. Another prior art technique is to cut the bare foil zone perpendicular to the longitudinal direction of the electrode sheet to obtain a slit or notch, and then bend towards the centre and press to achieve compaction. Such a solution is difficult to use in small cells.

The present invention provides a battery electrode sheet. Referring to Figs. 1-2, a battery electrode sheet in a preferred embodiment of the present invention comprises a coated zone 1 coated with electrode material in the longitudinal direction of the electrode sheet, and a bare foil zone 2 not coated with electrode material, the bare foil zone being provided with multiple oblique slots 21 and multiple oblique protrusions 22 in an alternating manner.

It must be explained that the structure of the oblique slots 21 and oblique protrusions 22 according to the present invention may be produced by cutting away foil material, at the oblique slot 21 parts, from the bare foil zone 2 not coated with electrode material, by a laser cutting technique commonly used by those skilled in the art, or may be produced by another cutting method such as die cutting. Thus, the cutting method is not specifically defined in the present invention.

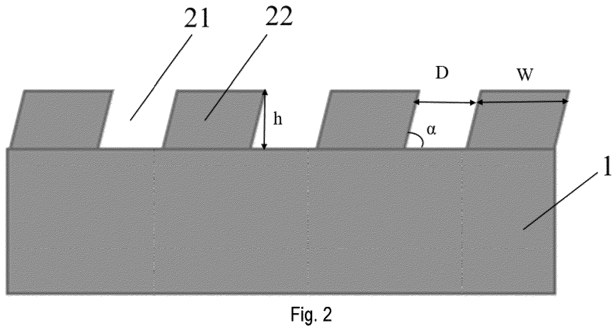

Referring to Fig. 2, the oblique slots 21 are parallel to the oblique protrusions 22, i.e. the oblique slots have the same degree of inclination (α in Fig. 2) as the oblique protrusions. As a preferred embodiment, the angle of inclination is 35 - 85 degrees, preferably 40 - 80 degrees, and further preferably 50 - 70 degrees. In the present invention, it has been found by experiment that when the angle of inclination α is 50 - 70 degrees, in the process of flattening and shaping, a flattening wheel (which flattens in the direction of inclination of the oblique protrusions 22) encounters less resistance, and better flatness can be achieved. It will be understood that those skilled in the art could also set a different angle as needed without departing from the scope of the present invention.

Referring to Fig. 2, the present invention does not impose any special restrictions on the depth of the oblique slot 21, i.e. the distance (h in Fig. 2) from an upper edge of the bare foil zone 2 to the lowest end of the oblique slot 21, as long as a good bending effect can be achieved. As a preferred embodiment, the ratio of the depth h of the oblique slot 21 to the width of the bare foil zone 2 is 0.2 - 1 (i.e. cut to an edge of the coated zone 1), preferably 0.3 - 0.8, and further preferably 0.4 - 0.6.

In the process of preparing a cell, one end of the electrode sheet is located at an innermost turn of a jelly roll core, and another end is located at an outermost turn of the core. The width of the oblique slots 21 may be a fixed value. In an embodiment, to achieve a better flattening effect, as a preferred embodiment, the widths (D in Fig. 2) of the oblique slots 21 gradually increase from one end (corresponding to the innermost turn of the core) to the other end (corresponding to the outermost turn of the core) of the electrode sheet. As a preferred embodiment, the ratio of the maximum width of the oblique slots 21 (corresponding to the outermost turn of the core) to the minimum width of the oblique slots (corresponding to the innermost turn of the core) is 5 : 1 - 9 : 1, preferably 6 : 1 - 8 : 1, more preferably 7 : 1. As a non-limiting embodiment, for example, the width of an oblique slot 21 in the innermost turn part of the core is 1 mm, the width of an oblique slot 21 in the outermost turn part of the core is 7 mm, and the widths of oblique slots 21 in a part therebetween increase from 1 mm to 7 mm gradually (for example, in an arithmetic sequence).

As another preferred embodiment, the widths Dₙ of the oblique slots 21 increase as the number of winding turns n of the electrode sheet increases, wherein Dₙ = D₁ + n × Dₐ, where D₁ is the width of an oblique slot 21 in the innermost turn (1st turn) of the core, Dₙ is the width of an oblique slot 21 in the nth turn of the core, and Dₐ is a predetermined value, determined according to the dimensions of the core and actual needs. As an embodiment, Dₐ is 0.05 - 2 mm, preferably 0.1 - 1 mm, and further preferably 0.5 mm. It must be explained that in this embodiment, the width Dₙ of oblique slots 21 in each turn is a fixed value, the tab end face obtained by this design having better uniformity and flatness. As a preferred embodiment, D₁ is 0.2 - 2 mm, preferably 0.5 - 1.5 mm, and further preferably 1 mm. For better understanding, as a non-limiting embodiment, for example, the width D₁ of an oblique slot 21 in the innermost turn (1st turn) of the core is 1 mm, and Dₐ is 0.5 mm, so according to Dₙ = 1 + n, it can be determined that the width D₂ of an oblique slot 21 in the 2nd turn is 1.5 mm, and so on. In another embodiment, the widths Dₙ of the oblique slots 21 may be set to increase progressively, every two or three turns. Those skilled in the art may also think of other settings without departing from the scope of the present invention.

The present invention also does not impose any special restrictions on the width (W in Fig. 2) of the oblique protrusions 22. As a preferred embodiment, the ratio of the width of the oblique protrusion 22 to the width of an adjacent oblique slot 21 is 1 : 1 - 5 : 1, preferably 1 : 1- 3 : 1, and more preferably 2 : 1. As a further preferred embodiment, the width W of the oblique protrusions 22 is 1 - 5 mm, preferably 1.5 - 3.5 mm, and further preferably 2 mm.

In the present invention, it has been found by experiment that the obtuse angle or acute angle structure of the oblique slots 21 and oblique protrusions 22 as shown in Fig. 2 easily breaks and easily sheds small particles in the process of flattening; therefore, the present invention improves the specific structure of the oblique slots 21 and oblique protrusions 22, to mitigate this problem. Specifically, referring to Fig. 1, a lower end of the oblique slot 21 is an oblique slot bottom 211, the oblique slot bottom 211 being designed to comprise a rounded corner structure or a circular arc structure. The "rounded corner structure" means that an acute angle structure and an obtuse angle structure at the bottom of the oblique slot 21 in Fig. 2 are adjusted to form two rounded corner structures. The "circular arc structure" means that an acute angle structure and an obtuse angle structure at the bottom of the oblique slot 21 in Fig. 2 are adjusted to form a circular arc structure. As a further preferred embodiment, similarly, an upper end of the oblique protrusion 22 is an oblique protrusion top 221, the oblique protrusion top 221 comprising a rounded corner structure or a circular arc structure. The "rounded corner structure" means that an acute angle structure and an obtuse angle structure at the top of the oblique protrusion 22 in Fig. 2 are adjusted to form two rounded corner structures. The "circular arc structure" means that an acute angle structure and an obtuse angle structure at the top of the oblique protrusion 22 in Fig. 2 are adjusted to form a circular arc structure. Designing the oblique slots 21 and oblique protrusions 22 in this way can increase the toughness of the oblique protrusions 22, mitigating the problem of easily breaking and easily shedding small particles in the process of flattening.

It must be explained that the battery electrode sheet according to the present invention may be a positive electrode sheet or a negative electrode sheet, so the electrode material respectively corresponds to a positive electrode material and a negative electrode material. Conventional preparation methods in the art may be used to prepare an electrode sheet coating, and are not described again herein.

In addition, in another aspect of the present invention, a cylindrical battery is provided, comprising the battery electrode sheet described above. A positive electrode of the battery is the electrode sheet according to the present invention, or a negative electrode of the battery is the electrode sheet according to the present invention, or each of the two is the electrode sheet according to the present invention.

### Cylindrical battery

In another aspect of the present invention, a cylindrical battery is provided, comprising a positive electrode sheet, a negative electrode sheet and a separator, the positive electrode sheet and/or the negative electrode sheet being the battery electrode sheet described above, an electrode material of the positive electrode sheet being a positive electrode material, and an electrode material of the negative electrode sheet being a negative electrode material. As a preferred embodiment, the positive electrode sheet, the negative electrode sheet and the separator are rolled up to form a cell, which is flattened such that ends substantially form a flat surface. The flat surface comprises multiple sheet-like small pieces, which are formed by the oblique protrusions 22.

As a further preferred embodiment, the sheet-like small pieces have an area of 1 - 10 mm², preferably 2-5 mm². The area of a single one of the sheet-like small pieces accounts for 2 - 8% of the area of the flat surface. The total area of the multiple sheet-like small pieces accounts for 40 - 90% of the area of the flat surface. In addition, the cylindrical battery according to the present invention may further comprise a collector plate, at least partially welded to the sheet-like small pieces.

### Method for manufacturing cylindrical battery

In another aspect of the present invention, a method for manufacturing a cylindrical battery is provided, the method using the battery electrode sheet described above. Once aware of the battery electrode sheet structure described above, those skilled in the art may use a conventional preparation method in the art to prepare it.

To better realize the technical effects of the present invention, a preferred battery manufacturing method is introduced here, but applications of the battery electrode sheet of the present invention are not limited as a result. In the method, a positive electrode sheet and a negative electrode sheet are both battery electrode sheets as described above, an electrode material of the positive electrode sheet being a positive electrode material, an electrode material of the negative electrode sheet being a negative electrode material, and the method comprising the following steps:
Step 1: the positive electrode sheet, the negative electrode sheet and a separator are rolled up to form a cell.
Step 2: positive/negative electrode end faces of the cell are flattened.
Step 3: collector plates are welded to the flattened positive/negative electrode end faces.
Step 4: the welded cell and other battery elements are assembled, followed by liquid injection and initial charging.

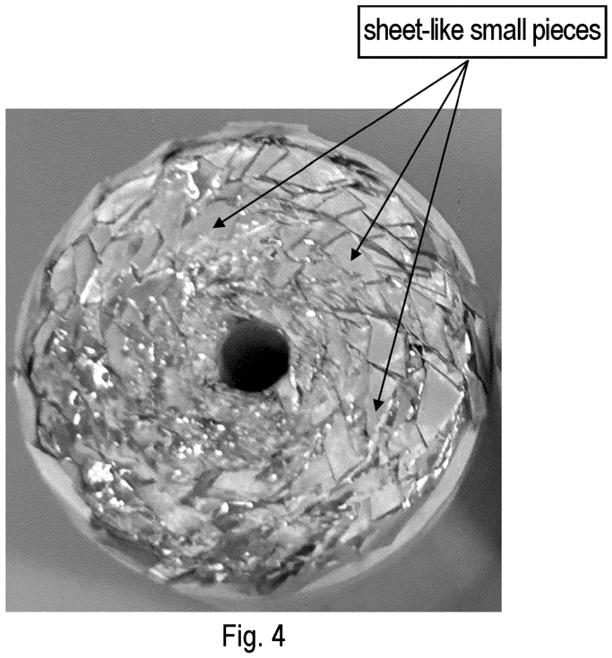

As a further preferred embodiment, the direction of flattening in step 2 is the same as the direction of inclination of the oblique protrusions 22. With such a step design combined with the structure of the oblique protrusions 22, the resistance encountered by the flattening wheel can be reduced, to press the oblique protrusions 22 down onto the tab end faces with less hindrance, thus mitigating the problems of breaking and shedding small particles. Moreover, once pressed down, the oblique protrusions 22 are stacked on top of one another like "fish scales" (as shown in Fig. 4), so are more layered, helping to increase the injection speed of electrolyte liquid and improve the injection effect thereof.

In addition, in comparison with the problem of weak welds at point contact between a collector plate and a tab end face obtained in the prior art, the tab end face of the present invention has more sheet-like structures, and can have surface contact with a collector plate; this can effectively increase the weld residue and weld strength and improve the weld foolproof effect, and thus reduce the battery internal resistance.

The above description of various embodiments of the present invention is provided to a person of ordinary skill in the relevant art for descriptive purposes. The present invention is not intended to be exclusive or limited to a single disclosed embodiment. Based on the above, a person of ordinary skill in the art as taught above will understand various substitutes for and variants of the present invention. Therefore, although some alternative embodiments have been specifically described, a person of ordinary skill in the art will understand, or develop with relative ease, other embodiments. The present invention is intended to include all substitutes for, alterations to, and variants of the present invention described herein, as well as other embodiments falling within the spirit and scope of the present invention described above.

## Claims

1. A battery electrode sheet, wherein it comprises a coated zone (1) coated with an electrode material in a longitudinal direction of the electrode sheet, and a bare foil zone (2) not coated with electrode material, the bare foil zone being provided with multiple oblique slots (21) and multiple oblique protrusions (22) in an alternating manner.

2. The battery electrode sheet as claimed in claim 1, wherein the oblique slot (21) and the oblique protrusion (22) have the same angle of inclination, which is 35 - 85 degrees, preferably 40 - 80 degrees, and further preferably 50 - 70 degrees.

3. The battery electrode sheet as claimed in claim 1, wherein the ratio of the depth of the oblique slot (21) to the width of the bare foil zone (2) is 0.2 - 1, preferably 0.3 - 0.8, and further preferably 0.4 - 0.6.

4. The battery electrode sheet as claimed in claim 1, wherein the widths of the oblique slots (21) gradually increase from one end to the other end of the electrode sheet.

5. The battery electrode sheet as claimed in claim 4, wherein the ratio of the maximum width to the minimum width of the oblique slots (21) is 5 : 1 - 9 : 1, preferably 6:1-8 : 1, and more preferably 7:1.

6. The battery electrode sheet as claimed in claim 4, wherein the ratio of the width of the oblique protrusion (22) to the width of an adjacent oblique slot (21) is 1 : 1 - 5 : 1, preferably 1 : 1 - 3 : 1, and more preferably 2:1.

7. The battery electrode sheet as claimed in claim 1, wherein the widths Dₙ of the oblique slots (21) increase as the number of winding turns n of the electrode sheet increases, wherein Dₙ = D₁ + n × Dₐ, where D₁ is the width of an oblique slot (21) in the innermost turn of a core, Dₙ is the width of an oblique slot (21) in the nth turn of the core, and Dₐ is a predetermined value.

8. The battery electrode sheet as claimed in claim 7, wherein D₁ is 0.2 - 2 mm, preferably 0.5 - 1.5 mm, and further preferably 1 mm.

9. The battery electrode sheet as claimed in claim 7, wherein the width W of the oblique protrusion (22) is 1 - 5 mm, preferably 1.5 - 3.5 mm, and further preferably 2 mm.

10. The battery electrode sheet as claimed in claim 1, wherein the oblique slot (21) comprises an oblique slot bottom (211), the oblique slot bottom (211) comprising a rounded corner structure or a circular arc structure;
optionally, the oblique protrusion (22) comprises an oblique protrusion top (221), the oblique protrusion top (221) comprising a rounded corner structure or a circular arc structure.

11. A cylindrical battery, wherein it comprises a positive electrode sheet, a negative electrode sheet and a separator, the positive electrode sheet and/or the negative electrode sheet being the battery electrode sheet as claimed in any one of claims 1 - 10, an electrode material of the positive electrode sheet being a positive electrode material, and an electrode material of the negative electrode sheet being a negative electrode material; preferably, the positive electrode sheet, the negative electrode sheet and the separator are rolled up to form a cell, which is flattened such that ends substantially form a flat surface.

12. The cylindrical battery as claimed in claim 11, wherein the flat surface comprises multiple sheet-like small pieces formed by the oblique protrusions (22).

13. The cylindrical battery as claimed in claim 12, wherein the sheet-like small pieces have an area of 1 - 10 mm², preferably 2 - 5 mm²; preferably, the area of a single one of the sheet-like small pieces accounts for 2 - 8% of the area of the flat surface; more preferably, the total area of the multiple sheet-like small pieces accounts for 40 - 90% of the area of the flat surface.

14. The cylindrical battery as claimed in claim 13, wherein it further comprises a collector plate at least partially welded to the sheet-like small piece.

15. A method for manufacturing a cylindrical battery, wherein it comprises the following steps:
step 1: rolling up a positive electrode sheet, a negative electrode sheet and a separator to form a cell, wherein the positive electrode sheet and negative electrode sheet are both battery electrode sheets as claimed in any one of claims 1 - 10, an electrode material of the positive electrode sheet being a positive electrode material, and an electrode material of the negative electrode sheet being a negative electrode material;
step 2: flattening positive/negative electrode end faces of the cell;
step 3: welding collector plates to the flattened positive/negative electrode end faces; and
step 4: assembling the welded cell and other battery elements, then performing liquid injection and initial charging;
preferably, in step 2, the direction of flattening is the same as the direction of inclination of an oblique protrusion (22).
